# EUROPÄISCHE PATENTANMELDUNG

(11) **EP 1 598 759 A1**
(43) Veröffentlichungstag der Anmeldung: **23.11.2005**
(21) Anmeldenummer: 04011904.2
(22) Anmeldetag: 19.05.2004
(51) Int. Cl.: G06F 17/60

(54) **Verfahren zur Kontrolle und Steuerung der Materialbeschaffung für eine Produktionseinrichtung**

(71) Anmelder: Swoboda + Company GmbH, D-30175 Hannover (DE)
(72) Erfinder: Hausmann, Bernadette Dr., 30175 Hannover (DE); Thiele, Martin, 30159 Hannover (DE)
(74) Vertreter: Vinazzer, Edith

(57) **Zusammenfassung**

Die Erfindung betrifft ein Verfahren zur Kontrolle und Steuerung der Materialbeschaffung für eine Produktionseinrichtung eines Unternehmens mittels einer Datenverarbeitungseinrichtung mit folgenden Verfahrensschritten:
- laufende Ermittlung von für die betreffende Produktion relevanten Bedarfsdatenwerten als Ist-Daten und Ermittlung von zu diesen in Beziehung zu setzenden Referenzdatenwerten
- Gliederung der Bedarfsdatenwerte und der Referenzdatenwerte hinsichtlich ihrer Eigenschaften in beeinflussbare und nicht beeinflussbare Datenwerte,
- differenzierte Darstellung der beeinflussbaren von den nicht beeinflussbaren Datenwerten,
- auf der Grundlage der Beziehung zwischen beeinflussbaren Ist-Datenwerten und den jeweils zugehörigen Referenzdatenwerten gegebenenfalls Veranlassung von Änderungen und Anpassungen der beeinflussbaren Faktoren.

## Beschreibung

Die Erfindung betrifft ein Verfahren zur Kontrolle und Steuerung der Materialbeschaffung für eine Produktionseinrichtung eines Unternehmens mittels einer Datenverarbeitungseinrichtung.

Es ist bekannt, dass die Materialkosten einen hohen Anteil an den Gesamtkosten von industriell hergestellten Produkten ausmachen. In der Automobilindustrie liegt dieser Anteil in der Größenordnung von 60 bis 75 %, in der metallverarbeitenden Industrie bei etwa 60 % und in der chemischen Industrie in der Größenordnung von 50 bis 60 %. Einer Möglichkeit zur Kontrolle und Steuerung der Materialbeschaffung käme daher ein hoher Stellenwert zu. Die Kontrolle und Steuerung der Materialbeschaffung sind jedoch bislang kaum beachtet worden und es gibt daher auch kein universell verwendbares Verfahren, welches den bestehenden Anforderungen entsprechen würde. Eine Untersuchung der Leistungsmessung in der strategischen Beschaffung (siehe F. Hedderich, M. Köppe: Kosteneinsparungsbasierte Leistungsmessung in der strategischen Beschaffung, 2003) hat ergeben, dass 60 % der europäischen und bis zu etwa 80 % der USamerikanischen Firmen diesbezüglich kein Verfahren benützen, und dass von den untersuchten Unternehmen nur rund 20 % überhaupt über ein fundiertes Verfahren zur Kontrolle und Steuerung der Materialbeschaffung verfügen. Nachdem kein standardisiertes und universell einsetzbares Verfahren auf der Basis des Einsatzes einer Einrichtung zur Datenverarbeitung erhältlich ist, ist jedes Unternehmen bislang gezwungen, eigene individuelle Lösungen zu schaffen.

Hier setzt nun die Erfindung ein, der die Aufgabe zu Grunde liegt, ein branchen- und unternehmensunabhängiges Verfahren zur Kontrolle und Steuerung der Materialbeschaffung unter Verwendung einer Einrichtung zur Datenverarbeitung zur Verfügung zu stellen, welches eine Optimierung, insbesondere Kostenoptimierung der Materialbeschaffung für eine Produktionseinrichtung, eine Beurteilung der gesamten Beschaffungsleistung, eine Bereitstellung von strukturierten und transparenten Beschaffungs-Daten und eine Früherkennung von geplanten Abweichungen während einer laufenden Planperiode und insbesondere auch zum Abschluss eines Geschäftsjahres gestattet.

Diese Aufgabe wird erfindungsgemäß durch ein Verfahren mit folgenden Verfahrensschritten gelöst:
- laufende Ermittlung von für die betreffende Produktion relevanten Bedarfsdatenwerten als Ist-Daten und Ermittlung von zu diesen in Beziehung zu setzenden Referenzdatenwerten,
- Gliederung der Bedarfsdatenwerte und der Referenzdatenwerte hinsichtlich ihrer Eigenschaften in beeinflussbare und nicht beeinflussbare Datenwerte,
- differenzierte Darstellung der beeinflussbaren von den nicht beeinflussbaren Datenwerten,
- auf der Grundlage der Beziehung zwischen beeinflussbaren Ist-Datenwerten und den jeweils zugehörigen Referenzdatenwerten gegebenenfalls Veranlassung von Änderungen und Anpassungen der beeinflussbaren Faktoren.

Das erfindungsgemäße Verfahren zur Kontrolle und Steuerung der Beschaffung von Materialien - Rohstoffen, Halbzeugen, Produktbestandteilen und dergleichen - basiert somit auf qualitativen und quantitativen Daten und einer besonderen Verknüpfung und Auswertung dieser Daten. Die Auswertungen stellen die beeinflussbaren von den nicht beeinflussbaren Daten bzw. Faktoren unabhängig voneinander dar und geben Analysen von zeitlichen Abweichungen. Das erfindungsgemäße Verfahren lässt sich daher vor allem auch als ein Frühwarnsystem zur Erkennung von Kostenerhöhungen, die die Herstellung bestimmter Produkte verteuern würden, einsetzen.

Eine Datenverarbeitungseinrichtung im Sinne dieser Erfindung ist eine zentrale oder dezentrale Vorrichtung (Hardware) für eine einen oder mehrere Benützer, wobei die Verknüpfung und Auswertung der Daten nach programmierten Algorithmen erfolgt.

Das Verfahren basiert auf einer Verknüpfung und Auswertung von qualitativen und quantitativen Daten, die vom Nutzer eingegeben werden. Bei einer bevorzugten Ausführung des Systems sind einige der eingegebenen Daten seitens der Unternehmensleitung zu genehmigen. Die programmgesteuert arbeitende Datenverarbeitungseinrichtung liefert eine Anzahl von Berichten (Reports), die die noch zu beschreibenden beeinflussbaren und nicht beeinflussbaren Parameter und Faktoren in bestimmten Zusammenhängen darstellen und zeitliche Analysen von Abweichungen aufzeigen.

Beim erfindungsgemäßen Verfahren zur Kontrolle und Steuerung der Materialbeschaffung werden, insbesondere in zeitlicher Aufeinanderfolge, folgende Datengruppen verarbeitet:
- Aktivierungsdaten
- Referenzdaten
- Ist-Daten

Aktivierungsdaten sind Daten, die prinzipiell einmal eingegeben werden. Diese Daten werden nach ihrer erstmaligen Eingabe üblicherweise unverändert belassen und somit vor Änderungen gesichert. Eine nachträgliche Änderung dieser Daten ist beispielsweise nur mit Genehmigung der Unternehmensleitung möglich.

Referenzdaten sind vorzugsweise jene Daten, die mit Beginn eines Geschäftsjahres festgelegt und eingegeben werden und sich auch dem geplanten Bedarf an Materialen (Budget) ergeben, wobei diesbezüglich auch die entsprechenden Daten aus einem vorangegangenen Geschäftsjahr herangezogen werden können. Auch diese Daten können nach ihrer erstmaligen Eingabe gesperrt werden und gehören vorzugsweise zu jenen Daten, die vor ihrer Eingabe seitens der Unternehmensleitung freigegeben werden müssen. Nachträgliche Änderungen dieser Daten wären daher ebenfalls nur mit Genehmigung der Unternehmensleitung möglich.

Zu den Ist-Daten gehören jene Daten, die sich im Laufe der betrachteten Geschäftsperiode bzw. Produktionsperiode aus dem tatsächlichen Bedarf an Materialien ergeben. Diese werden laufend eingegeben. Auch diese Daten können in bestimmten Zeitabständen, beispielsweise am Ende eines Monates, in dem die Eingabe stattgefunden hat, bezüglich Änderungen gesperrt werden und können dafür vorgesehen werden, nachträglich nur mit Genehmigung der Unternehmensleitung geändert zu werden.

Zu den Aktivierungsdaten zählen insbesondere Identifikationsdaten (personenbezogene Daten betreffend den Nutzer, den entscheidungsbefugten Vorgesetzten etc.), Materialstrukturdaten (betreffend den Aufbau der Produkte des Unternehmens, der verwendeten Materialklassen etc.) und Regeldaten (betreffend eine etwaige Genehmigung, Festlegung der Marktpreisfindung etc.).

Das erfindungsgemäße Verfahren liefert aus den Referenzdaten und den Ist-Daten insbesondere folgende Informationen:
- Eine um die eingegebenen Volumens-, Währungs- und Marktpreisdaten bereinigte Prognose der Gesamtkosten pro Produkt oder Materialgruppe,
- Eine konsolidierte Gesamtsumme der Beschaffungskosten pro Division bzw. sonstigem Produktionsbereich
- Eine konsolidierte Aufstellung aller relevanten beeinflussbaren Maßnahmen.

Aus den Ist-Daten werden insbesondere Analysen des Forecastings und Analysen von Abweichungen erstellt, um zeitgerecht, insbesondere unmittelbar, geeignete Maßnahmen treffen zu können. Dabei können Abstände definiert werden, in welchen Abweichungsanalysen von Ist-Daten gegenüber Referenzdaten erfolgen, verbunden mit einem Forecasting.

Die Ist-Daten lassen sich in vier Gruppen einteilen. Zu drei dieser Gruppen gehören Daten, die nicht beeinflussbar sind.

Die nicht beeinflussbaren Datengruppen sind im Einzelnen:
- Mengen- und Volumendaten (Bedarf an Materialien - Rohstoffen, Halbzeugen, Bestandteilen etc. für die Produktion bestimmter Produkte oder Produktgruppen); Änderungen ergeben sich beispielsweise aufgrund von nicht vorhersehbaren Verschiebungen im Bedarf bestimmter Produkte, beispielsweise in Folge von Neuankauf oder Ankauf von Produkten oder Werkzukäufen oder durch Änderungen in Spezifikationen.
- Währungsdaten: Es kann zu nicht vorhersehbaren Änderungen relevanter Wechselkurse zum ursprünglich angenommen Kurs und daher zu Mehr-oder Minderkosten kommen, beispielsweise wenn ein bestimmtes Material in einer Fremdwährung (z.B. US$) eingekauft wird.
- Marktpreisdaten: Der Marktpreis eines Materials kann sich aufgrund nicht vorhersehbarer Änderungen der Marktsituation ebenfalls ändern; hebt oder senkt sich das Gesamtniveau des Marktes so spiegelt sich das auch im Einkaufspreis des betreffenden Produktes wieder, so kann beispielsweise durch Schließung eines Lieferantenwerkes Knappheit im Markt entstehen.

Die beeinflussbaren Daten ergeben sich aus der Planung bzw. der Strategie, die für ein bestimmtes Material oder für eine bestimmte Produktgruppe vorgesehen ist. Diese Planungs- und Strategiefindung kann dabei durch bekannte Methoden unterstützt werden. Die beeinflussbaren Daten werden in einem Aktionsplan gesammelt, welcher die zu erwartenden Kosten wiedergibt und welchem auch Einsparpotentiale entnommen werden können. Dieser Aktionsplan kann daher vorteilhafter Weise zu Kosteneinsparungen führen, die sich direkt aus den tatsächliche vorgenommenen Aktionen ableiten, beispielsweise die Nutzung eines Low-Cost-Lieferanten in einem bestimmten Land oder den Einsatz eines kostengünstigeren Materials.

Wie bereits erwähnt liefert die Datenverarbeitungseinrichtung für den Budgetprozess, für das Forecasting während eines Geschäftsjahres und für den Abschluss eines Geschäftsjahres eine Vielzahl von Analysen und Reports. Diese Berechnungen und Analysen können auf bestimmte Materialgruppen, Beschaffungsaktivitäten etc. eingeschränkt werden. Selbstverständlich wird vorgesehen, dass aus den zur Verfügung stehenden Daten auf flexible Weise bestimmte Daten in Reports zusammengestellt werden können, indem beispielsweise einzelne Datenfelder ein- oder ausgeblendet werden können und die Reports und Analysen bezüglich der ausgegebenen Daten möglichst flexibel gestaltet werden können.

Die Analysen und Reports können sowohl in tabellarischer als auch in graphischer Form dargestellt werden. Eine graphische Darstellung empfiehlt sich beispielsweise bei der Darstellung der Entwicklung des Bedarfs an bestimmten Materialien, der Entwicklung des Marktpreises und bei der Darstellung einzelner Effekte, indem beispielweise ausgehend vom Budget in Säulendarstellung einzelne Effekte, wie Verbrauchseffekt, Währungseffekt und Marktpreiseffekt aufgezeigt werden. Das Verfahren kann dabei Auswertungen sowohl pro Anwender als auch konsolidiert liefern.

Nachfolgend werden beispielhaft dem Verfahren zugrundeliegende wesentliche Daten und durch das Verfahren erhaltene Analysen näher beschrieben.

### Identifikationsdaten

- Nutzer-ID:: Identifikationsnummer des Systemnutzers
- Manager-ID:: Identifikationsnummer des zuständigen Managers bzw. Vorgesetzten (relevant für Freigabe / Genehmigung)
- Profit-/Loss-ID:: Identifikationsnummer für die Division / P&L für welche ein Material beschafft wird.
*Bei mehreren Divisionen ist die Eingabe einer %-Zuordnung erforderlich*.

- Materialklassen-ID:: Identifikationsnummer der Materialklasse
- Name
- Code
- Ggf. Zuordnung zu übergeordneter Materialklasse
- Produkt-ID:: Identifikationsnummer des Produkts
- Name
- Code
- Zuordnung zu Materialklasse

### Eingangsdaten

### Bedarfsdaten

- Aktivierungseingabe:: - Einheit (Stück, kg, etc.)
- historische Informationen über den Bedarf bzw. Verbrauch (beispielsweise im vergangenen Geschäftsjahr)
- Budgeteingabe:: - **V**_{E-BUD}: voraussichtlicher Verbrauch für laufendes Geschäftsjahr
- Ist-Eingabe:: - **V**_{E-IST-UJ}: Verbrauchsabweichung während des Jahres
- Kommentarfeld bei unterjähriger Abweichung
- **V**_{E-IST}: tatsächlicher Verbrauch am Ende des Jahres
- Kommentarfeld bei Abweichung Ende des Jahres

### Währungsdaten

- Aktivierungseingabe:: - Währung ($, 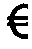 , etc.)
- historische Informationen Wechselkurs
- (zumindest vergangenes Geschäftsjahr)
- Budgeteingabe:: - **W**_{E-BUD}: Planwert Wechselkurs
- **W**_{E-BUD-REV}: Ggf. revidierter Wechselkurs zu Beginn des Geschäftsjahres (falls der Planwert bereits Monate früher getroffen wurde und nicht mehr realistisch erscheint)
- Ist-Eingabe:: - **W**_{E-IST-UJ}: Währungskursabweichung während des Jahres
- Kommentarfeld bei unterjähriger Abweichung
- **W**_{E-IST-QU}: Quartalsweiser Durchschnittswert
- Kommentarfeld bei Abweichung an Quartalsende
- **W**_{E-IST}: Durchschnittswert des Gesamtjahres
- Kommentarfeld bei Abweichung Ende des Jahres

### Marktpreisdaten

- Aktivierungseingabe:: - Festlegung der Methode zur Referenzwertermittlung:
   o Index (Commodity)
   o größter Lieferant
   o Durchschnittspreis von Lieferanten zum Zeitpunkt der Festlegung
   o Marktführer
   o Bestes Angebot (engineered parts)
   o Durchschnittspreis des letzten Jahres
- Begründung zur Festlegung der Methode
- historische Informationen zu Preisen (zumindest (vergangenes Geschäftsjahr)
- andere, auch selbst definiert
- Budgeteingabe:: - **P**_{E-BUD}: Planwert des Preisniveaus für das kommende Geschäftsjahr
- Begründung für die Annahmen (z. B. % Abhängigkeit von Rohstoff etc.)
- Verhandlungszeitraum (monatlich, quartal, halbjährig, jährlich)
- Ist-Eingabe:: - **P**_{E-IST-VZ}: neu zu ermittelnder Durchschnittspreis pro Gesamtjahr zum Verhandlungszeitpunkt bei unterjähriger Verhandlung
- **M**_{E-IST-VZ}: neu zu ermittelnder Durchschnitts-Marktpreis pro Gesamtjahr bei einer Marktpreisänderung zum Verhandlungszeitpunkt bei unterjähriger Verhandlung
- Kommentarfeld bei Abweichung durch unterjährige Verhandlung
- **P**_{E-IST:} Durchschnittspreis zum Ende des Geschäftsjahres
- **M**_{E-IST:} Durchschnitts-Marktpreis zum Ende des Geschäftsjahres
- Kommentarfeld bei Abweichung am Ende des Jahres

*Die Anzahl der Ist-Eingaben VZ wird getriggert durch den bei der Budgeteingabe definierten Verhandlungszeitraum.*

### Beeinflussbare-Daten

- Budgeteingaben: (pro Aufgabe): - Aufgabenbeschreibung
- Zeitrahmen der Wirksamkeit
- **E**_{E-BUD}: Einspar-Volumen
- Berechnungsannahmen für Einspar-Volumen
- Ist-Eingaben: (pro Aufgabe): - **E**_{E-IST-UJ}: monatliche Bestätigung oder Veränderung des Budgets
- Kommentarfeld bei unterjähriger Abweichung
- **E**_{E-IST}: Finale Bestätigung / Änderung des Budgets am Ende des Geschäftsjahres Ist-Eingabe "Kommentarfeld bei Abweichung Ende des Jahres"

### Ausgangs-Daten (Basis)

### Verbrauchsdaten

- Budgetausgabe:: - **V**_{A-BUD}: Budgetierter Verbrauch pro Jahr
- Ist-Ausgabe:: - **V**_{A-IST-UJ}: Forecast Verbrauch bei unterjähriger Änderung
- Ist-Eingabe "Kommentarfeld bei unterjähriger Änderung"
- **V**_{A-IST}: Aktueller Verbrauch im Geschäftsjahr
- Ist-Eingabe: "Kommentarfeld bei Abweichung Ende des Jahres"

### Währungsdaten

- Budgetausgaben:: - **W**_{A-BUD:} Budgetierter Wechselkurs
- **W**_{A-BUD-REV:} Revidierter budgetierter Wechselkurs zu Beginn des Geschäftsjahres
- Ist-Ausgabe:: - **W**_{A-IST-UJ}: Forecast aktueller durchschnittlicher Währungskurs bei unterjähriger Änderung
- Ist-Eingabe "Kommentarfeld bei unterjähriger Änderung"
- **W**_{A-IST-QU}: Forecast aktueller durchschnittlicher Währungskurs am Quartalsende
- Ist-Eingabe "Kommentarfeld bei Abweichung am Quartalsende"
- **W**_{A-IST}: Aktueller durchschnittlicher Wechselkurs im Geschäftsjahr
- Ist-Eingabe "Kommentarfeld bei Abweichung Ende des Jahres"

### Marktpreisdaten

- Budgetausgaben:: - **P**_{A-BUD}: Budgetwert des Preisniveaus für das kommende Geschäftsjahr
- Ist-Eingabe "Begründung für die Annahmen"
- Ist-Eingabe "Verhandlungszeitraum"
- Ist-Ausgabe:: - **P**_{A-IST-VZ}: neu zu ermittelnder Durchschnittspreis pro Geschäftsjahr zum Verhandlungszeitpunkt
- **M**_{A-IST-VZ}: neu zu ermittelnder Durchschnitts-Marktpreis pro Geschäftsjahr bei einer Marktpreisänderung zum Verhandlungszeitpunkt
- Ist-Eingabe "Kommentarfeld bei Abweichung durch unterjährige Verhandlung"
- **P**_{A-IST}: Durchschnittspreis zum Ende des Geschäftsjahres
- **M**_{A-IST}: Durchschnitts-Marktpreis zum Ende des Geschäftsjahres
- Ist-Eingabe "Kommentarfeld bei Abweichung am Ende des Jahres"

*Die Anzahl der Ist-Ausgaben VZ wird getriggert durch den bei der Budgeteingabe definierten Verhandlungszeitraum.*

### Beeinflussbare Daten

- Budgetausgaben: (pro Aufgabe): - Budgeteingabe "Aufgabenbeschreibung
- Budgeteingabe "Zeitrahmen der Wirksamkeit"
- **E**_{A-BUD} Budgeteingabe "Einspar-Volumen"
- Budgeteingabe "Berechnungsannahmen für Einspar-Volumen"
- Ist-Ausgaben:: - **E**_{A-IST-UJ}: monatliche Bestätigung oder Veränderung des Budgets
- Ist-Eingabe "Kommentarfeld bei unterjähriger Abweichung"
- **E**_{A-IST}: Finale Bestätigung / Änderung des Budgets am Ende des Geschäftsjahres
- Ist-Eingabe "Kommentarfeld bei Abweichung Ende des Jahres"

### Ausgangsdaten (Kalkulation)

### Weitere Ausgangsdaten zu Budget

| Gesamtkosten | |
|---|---|
| **GK**_{BUD} | **V**_{A-BUD} * **P**_{A-BUD} * **W**_{A-BUD} (bei Fremdwährung) |
| Gesamtkosten revidiert | |
| **GK**_{BUD-REV} | **V**_{A-BUD} * **P**_{A-BUD} * **W**_{A-BUD-REV} (bei Fremdwährung) |
| Währungs-Abweichung Budget | |
| ^{Δ}_{W-BUD} | **GK**_{BUD-REV} - **GK**_{BUD} |

### Abweichungsanalyse - unterjährig

Um die Abweichungen voneinander abzugrenzen bleiben jeweils die anderen Faktoren konstant auf Budgetwert.

| | |
|---|---|
| Volumen-Forecast unterjährig | |
| **GK**_{V-FC-UJ} | **V**_{A-IST-UJ} * **P**_{A-BUD} * **W**_{A-BUD-REV} |
| Volumen-Abweichung unterjährig | |
| ^{Δ}_{V-FC-UJ} | **GK**_{V-FC-UJ} - **GK**_{BUD-REV} |

| | |
|---|---|
| Währungs-Forecast unterjährig | |
| **GK**_{W-FC-UJ} | **V**_{A-BUD} * **P**_{A-BUD} * **W**_{A-IST-UJ} |
| Währungs-Abweichung unterjährig | |
| ^{Δ}_{W-FC-UJ} | **GK**_{W-FC-UJ} - **GK**_{BUD-REV} |
| Währungs-Forecast Quartal | |
| **GK**_{W-FC-QU} | **V**_{A-BUD} * **P**_{A-BUD} * **W**_{A-IST-QU} |
| Währungs-Abweichung Quartal | |
| ^{Δ}_{W-FC-QU} | **GK**_{W-FC-QU} - **GK**_{BUD-REV} |

| | |
|---|---|
| Preis-Forecast bei unterjähriger Verhandlung | |
| **GK**_{P-FC-VZ} | **V**_{A-BUD} * **P**_{A-IST-VZ} * **W**_{A-BUD-REV} |
| Preis-Abweichung bei unterjähriger Verhandlung | |
| ^{Δ}_{P-FC-VZ} | **GK**_{P-FC-VZ} - **GK**_{BUD-REV} |
| Marktpreis-Forecast bei unterjähriger Verhandlung | |
| **GK**_{M-FC-VZ} | **V**_{A-BUD} * **M**_{A-IST-VZ} * **W**_{A-BUD-REV} |
| Marktpreis-Abweichung bei unterjähriger Verhandlung | |
| ^{Δ}_{M-FC-VZ} | **GK**_{M-FC-VZ} - **GK**_{BUD-REV} |
| Preis-Marktpreis-Abweichung bei unterjähriger Verhandlung | |
| ^{Δ}_{PM-FC-VZ} | **GK**_{P-FC-VZ} - **GK**_{M-FC-VZ} |

Es gibt 6 Fälle, die geprüft werden können.

| Scenario 1: Budget > Marktpreis > Preis | |
|---|---|
| ^{Δ}_{P-FC-VZ} negativ | |
| ^{Δ}_{M-FC-VZ} negativ | reiner Markteffekt (positiv ergebniswirksam) |
| ^{Δ}_{PM-FC-VZ} negativ | Einsparung (positiv ergebniswirksam) |

| Scenario 2: Budget > Preis > Marktpreis | |
|---|---|
| ^{Δ}_{P-FC-VZ} negativ | reiner Markteffekt (positiv ergebniswirksam) |
| ^{Δ}_{M-FC-VZ} negativ | keine Einsparung (nicht ergebniswirksam) |
| ^{Δ}_{PM-FC-VZ} positiv | |

| Scenario 3: Preis > Budget > Marktpreis | |
|---|---|
| ^{Δ}_{P-FC-VZ} positiv | keine Einsparung (negativ ergebniswirksam) |
| ^{Δ}_{M-FC-VZ} negativ | keine Einsparung (nicht ergebniswirksam) |
| ^{Δ}_{PM-FC-VZ} positiv | |

| Scenario 4: Marktpreis > Budget > Preis | |
|---|---|
| ^{Δ}_{P-FC-VZ} negativ | Einsparung (positiv ergebniswirksam) |
| ^{Δ}_{M-FC-VZ} positiv | Einsparung (nicht ergebniswirksam) |
| ^{Δ}_{PM-FC-VZ} negativ | |

| Scenario 5: Preis > Marktpreis > Budget | |
|---|---|
| ^{Δ}_{P-FC-VZ} positiv | |
| ^{Δ}_{M-FC-VZ} positiv | Einspannung (negativ ergebniswirksam) |
| ^{Δ}_{PM-FC-VZ} positiv | keine Einsparung (negativ ergebniswirksam) |

| Scenario 6: Marktpreis > Preis > Budget | |
|---|---|
| ^{Δ}_{P-FC-VZ} positiv | reiner Markteffekt (negativ ergebniswirksam) |
| ^{Δ}_{M-FC-VZ} positiv | |
| ^{Δ}_{PM-FC-VZ} negativ | Einsparung (nicht ergebniswirksam) |

Je nach Scenario ergeben sich daher
- Markteffekte
- Einsparungseffekte
- oder keine Einsparungseffekte
welche
- nicht ergebniswirksam
- positiv ergebniswirksam
- negativ ergebniswirksam
sein können

### Abweichungsanalyse - Ende des Geschäftsjahres

Um die Abweichungen voneinander abzugrenzen bleiben jeweils die anderen Faktoren konstant auf Budgetwert. Die Berechnungsprinzipien sind analog zu 5.2

| | |
|---|---|
| Volumen-Ist Geschäftsjahr | |
| **GK**_{V-IST} | **V**_{A-IST} * **P**_{A-BUD} * **W**_{A-BUD-REV} |
| Volumen-Abweichung Geschäftsjahr | |
| ^{Δ}_{V-IST} | **GK**_{V-IST} - **GK**_{BUD-REV} |

| | |
|---|---|
| Währungs-Ist Geschäftsjahr | |
| **GK**_{W-IST} | **V**_{A-BUD} * **P**_{A-BUD} * **W**_{A-IST} |
| Währungs-Abweichung Geschäftsjahr | |
| ^{Δ}_{W-IST} | **GK**_{W-IST} - **GK**_{BUD-REV} |

| | |
|---|---|
| Preis-Ist Geschäftsjahr | |
| **GK**_{P-IST} **V**_{A-BUD} * **P**_{A-IST} * **W**_{A-BUD-REV} | |
| Preis-Abweichung Geschäftsjahr | |
| ^{Δ}_{P-IST} | **GK**_{P-IST} - **GK**_{BUD-REV} |
| Marktpreis-Ist Geschäftsjahr | |
| **GK**_{M-IST} | **V**_{A-BUD} * **M**_{A-IST} * **W**_{A-BUD-REV} |
| Marktpreis-Abweichung Geschäftsjahr | |
| ^{Δ}_{M-IST} | **GK**_{M-IST} - **GK**_{BUD-REV} |
| Preis-Marktpreis-Abweichung Geschäftsjahr | |
| ^{Δ}_{PM-IST} | **GK**_{P-IST} - **GK**_{M-IST} |

Es gibt 6 Fälle, die geprüft werden können.

| Scenario 1: Budget > Marktpreis > Preis | | |
|---|---|---|
| ^{Δ}_{P-IST} | negativ | |
| ^{Δ}_{M-IST} | negativ | reiner Markteffekt (positiv ergebniswirksam) |
| ^{Δ}_{PM-IST} | negativ | Einsparung (positiv ergebniswirksam) |

| Scenario 2: Budget > Preis > Marktpreis | | |
|---|---|---|
| ^{Δ}_{P-IST} | negativ | reiner Markteffekt (positiv ergebniswirksam) |
| ^{Δ}_{M-IST} | negativ | keine Einsparung (nicht ergebniswirksam) |
| ^{Δ}_{PM-IST} | positiv | |

| Scenario 3: Preis > Budget > Marktpreis | | |
|---|---|---|
| ^{Δ}_{P-IST} | positiv | keine Einsparung (negativ ergebniswirksam) |
| ^{Δ}_{M-IST} | negativ | keine Einsparung (nicht ergebniswirksam) |
| ^{Δ}_{PM-IST} | positiv | |

| Scenario 4: Marktpreis > Budget > Preis | | |
|---|---|---|
| ^{Δ}_{P-IST} | negativ | Einsparung (positiv ergebniswirksam) |
| ^{Δ}_{M-IST} | positiv | Einsparung (nicht ergebniswirksam) |
| ^{Δ}_{PM-IST} | negativ | |

| Scenario 5: Preis > Marktpreis > Budget | | |
|---|---|---|
| ^{Δ}_{P-IST} | positiv | |
| ^{Δ}_{M-IST} | positiv | reiner Markteffekt (negativ ergebniswirksam) |
| ^{Δ}_{PM-IST} | positiv | keine Einsparung (negativ ergebniswirksam) |

| Scenario 6: Marktpreis > Preis > Budget | | |
|---|---|---|
| ^{Δ}_{P-IST} | positiv | reiner Markteffekt (negativ ergebniswirksam) |
| ^{Δ}_{M-IST} | positiv | |
| ^{Δ}_{PM-IST} | negativ | Einsparung (nicht ergebniswirksam) |

Je nach Scenario ergeben sich:
- Markteffekte
- Einsparungseffekte
- keine Einsparungseffekte
welche
- nicht ergebniswirksam
- positiv ergebniswirksam
- negativ ergebniswirksam
sein können.

## Patentansprüche

1. Verfahren zur Kontrolle und Steuerung der Materialbeschaffung für eine Produktionseinrichtung eines Unternehmens mittels einer Datenverarbeitungseinrichtung mit folgenden Verfahrensschritten:
• laufende Ermittlung von für die betreffende Produktion relevanten Bedarfsdatenwerten als Ist-Daten und Ermittlung von zu diesen in Beziehung zu setzenden Referenzdatenwerten,
• Gliederung der Bedarfsdatenwerte und der Referenzdatenwerte hinsichtlich ihrer Eigenschaften in beeinflussbare und nicht beeinflussbare Datenwerte,
• differenzierte Darstellung der beeinflussbaren von den nicht beeinflussbaren Datenwerten,
• auf der Grundlage der Beziehung zwischen beeinflussbaren Ist-Datenwerten und den jeweils zugehörigen Referenzdatenwerten gegebenenfalls Veranlassung von Änderungen und Anpassungen der beeinflussbaren Faktoren.

2. Verfahren nach Anspruch 1, **dadurch gekennzeichnet, dass** als weitere Daten Aktivierungsdaten berücksichtigt werden, welche Identifikationsdaten, wie personenbezogene Daten betreffend den Nutzer, oder strukturelle Daten über die zu beschaffenden Materialien für die betreffende Produktion, beispielsweise Daten über den Aufbau der Produkte und die relevanten Materialklassen, gehören.

3. Verfahren nach Anspruch 1 oder 2, **dadurch gekennzeichnet, dass** als weitere Daten Regeldaten berücksichtigt werden, zu welchen beispielsweise Daten betreffend eine etwaige Genehmigung, Regeln zur Marktpreisfindung und dergleichen, gehören.

4. Verfahren nach Anspruch 1, **dadurch gekennzeichnet, dass** zu den Referenzdaten Budgetdaten über geplante Mengen bzw. geplanter Verbrauch der zu beschaffenden Materialien, ferner geplante Wechselkurse und / oder geplante Preisentwicklungen gehören.

5. Verfahren nach einem der Ansprüche 1 bis 4, **dadurch gekennzeichnet, dass** zumindest ein Teil der Aktivierungsdaten und / oder der Referenzdaten nachträglich nur mit Genehmigung des Unternehmensleitung veränderbar sind.

6. Verfahren nach einem der Ansprüche 1 bis 5, **dadurch gekennzeichnet, dass** als nicht beeinflussbare Datenwerte Daten aus den Gruppen Marktpreisdaten, Währungsdaten und Materialvolumendaten herangezogen werden.

7. Verfahren nach einem der Ansprüche 1 bis 6, **dadurch gekennzeichnet, dass** die nicht beeinflussbaren Datenwerte und deren Änderungen im Laufe eines Zeitraumes, beispielsweise eines Geschäftsjahres, einzeln oder gemeinsam analysiert werden.

8. Verfahren nach einem der Ansprüche 1 bis 7, **dadurch gekennzeichnet**, ein Aktionsplan zur Feststellung der beeinflussbaren Daten erstellt wird.

9. Verfahren nach einem der Ansprüche 1 bis 7, **dadurch gekennzeichnet, dass** dem Aktionsplan abgeleitete oder entnommene Daten als Referenzdaten herangezogen werden.

10. Verfahren nach einem der Ansprüche 1 bis 9, **dadurch gekennzeichnet, dass** den Auswertungen und Analysen budgetierte und ergänzte Ist-Daten der Bedarfsdaten, der Währungsdaten und der Marktpreisdaten zu Grunde gelegt werden.

11. Verfahren nach einem der Ansprüche 1 bis 10, **dadurch gekennzeichnet, dass** den Auswertungen und Analysen die budgetierten Daten und die Ist-Werte der dem Aktionsplan entnommen Daten zu Grunde gelegt werden.

12. Verfahren nach einem der Ansprüche 1 bis 11, **dadurch gekennzeichnet, dass** bei der Erstellung einer Abweichungsanalyse die Daten aus einer der Datengruppen analysiert und die weiteren konstant auf ihren budgetierten Werten gehalten werden.
